# EUROPEAN PATENT APPLICATION

(11) **EP 2 051 413 A1**
(43) Date of publication of application: **22.04.2009**
(21) Application number: 08166009.4
(22) Date of filing: 07.10.2008
(51) Int. Cl.: H04B 10/08

(54) **Signal monitoring device, communication system, signal monitoring method, and recording medium for recording program of signal monitoring device**

(30) Priority: 19.10.2007 JP 2007272550
(71) Applicant: NEC CORPORATION, Tokyo 108-8001, (JP)
(72) Inventor: Fujimura, Atsushi c/o NEC Corporation,, Tokyo (JP)
(74) Representative: Betten & Resch

(57) **Abstract**

Even before a communication partner device is incorporated into an operating state, an abnormal communication partner device can be detected, so that it is possible to prevent an abnormal communication partner device from affecting communications with other devices, whereby stable communications can be achieved. To this end, a signal monitoring device includes abnormality detecting means for detecting an abnormality of a communication partner device based on whether a receiving signal exists at a time slot allocated as a non-use bandwidth or not.

## Description

This application is based upon and claims the benefit of priority from Japanese paten application No. 2007-272550, filed on October 19, 2007, the disclosure of which is incorporated herein in its entirety by reference.

### BACKGROUND OF THE INVENTION

### Field of the Invention

The present invention relates to a signal monitoring device, a communication system, a signal monitoring method, and a recording medium for recording a program of a signal monitoring device in a point-to-multipoint optical communication system in which a station-side device performs optical communications with a plurality of subscriber-side devices, such as a passive optical network (PON) system.

### Description of the Related Art

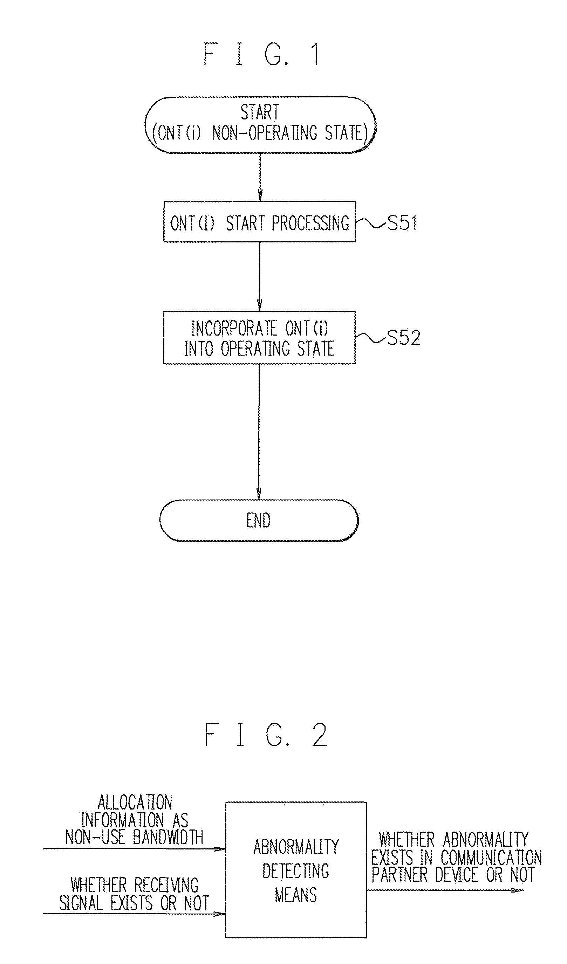

As a related art of the present invention, a method for incorporating an optical network terminal (ONT) into an optical communication system as an operating state will be described with reference to a flowchart of before an operation starts which is shown in FIG. 1.

First, as an initial state, an ONT (i) is in a non-operating state. Then, start processing of an ONT (i) is performed (step S51). As start processing, for example, distance measurement (ranging) processing for an ONT (i) is performed. When start processing is completed, an ONT (i) is incorporated to an operating state, and the procedure is finished (step S52).

In a system that a plurality of ONTs share a transmission line like such a PON system, if one ONT abnormally outputs light during a period other than a bandwidth allocation period due to a breakdown, it affects communications of other ONTs.

As another related art of the present invention, in a PON system which connects a master station and a slave station, a master station sequentially transmits a command for turning off light of a slave station to respective slave stations, and when a command is transmitted to a certain slave station, if an optical signal which has been continuously received disappears, a corresponding slave station is determined as having a breakdown (e.g., see Patent Document 1 (Japanese Patent Application Laid-Open (JP-A) No. 2004-112746)).

As another related art of the present invention, if a fault is detected, a slave station with a fault is specified by repetitively performing, with respect to each slave station, an operation of releasing a bandwidth allocation of all slave stations, detecting receiving power at that time, allocating a maximum bandwidth to one slave station to then detect receiving power, and comparing it to receiving power of when a bandwidth allocation of all slave stations is released (e.g., see Patent Document 2 (JP-A No. 2002-359596)).

Next, technical problems of the related arts mentioned above will be described.

First, in a PON system, alarm monitoring for a certain ONT is performed only during a bandwidth allocation period of a monitoring target ONT. That is, even though an abnormal ONT which outputs light during a bandwidth allocation period of a neighboring ONT is connected, if the ONT normally outputs upstream burst data during a bandwidth allocation period thereof, alarm for the ONT is not detected, whereby upstream burst data of the neighboring ONT is destroyed.

Also, the above-mentioned Patent Documents 1 and 2 are to detect a slave station with an abnormality when an abnormality occurs, and because it first incorporates a slave station into an operating state directly after start processing is completed, a technique for detecting a slave station with an abnormal light output before it is incorporated to an operating state is not considered.

### SUMMARY

The present invention is to resolve the above-mentioned problems. To this end, it is an exemplary object of the present invention to provide a signal monitoring device, a communication system, a signal monitoring method, and a recording medium for recording a program of a signal monitoring device in which a communication partner device with an abnormality can be detected even before incorporated into an operating state, and it is possible to prevent a device with an abnormality from affecting communications with other devices, whereby stable communications can be achieved.

In order to achieve the above object, a signal monitoring device of the present invention includes an abnormality detecting unit that detects an abnormality of a communication partner device based on whether a receiving signal exists at a time slot allocated as a non-use bandwidth or not.

A communication system of the present invention includes a plurality of communication partner devices that are connected to the signal monitoring device via a signal transmission line.

A signal monitoring method of the present invention includes a signal detecting process of determining whether a receiving signal exists at a time slot allocated as a non-use bandwidth or not, and an abnormality detecting process of detecting an abnormality of a communication partner device based on the determination result of the signal detecting process.

A recording medium for recording a program of a signal monitoring device according to the present invention includes the program performing, in the signal monitoring device, signal detection processing for determining whether a receiving signal exists at a time slot allocated as a non-use bandwidth or not, and abnormality detection processing of detecting an abnormality of a communication partner device based on the determination result of the signal detection processing.

### BRIEF DESCRIPTION OF THE DRAWINGS

FIG. 1 is a flowchart illustrating an ONT incorporating method according to a related art of the present invention;
FIG. 2 is a view illustrating schematically an exemplary embodiment of the present invention;
FIG. 3 is a block diagram illustrating major components of an OLT 1 according to the exemplary embodiment of the present invention;
FIG. 4 is a block diagram illustrating a configuration of a PON system according to the exemplary embodiment of the present invention;
FIG. 5 is a timing chart illustrating a downstream signal from the OLT 1 and upstream burst data from an ONT;
FIG. 6 is a time chart illustrating a judgment of abnormality detection by non-use bandwidth monitoring;
FIG. 7 is a flowchart illustrating an operation when non-use bandwidth monitoring is performed in a non-operating state;
FIG. 8 is a flowchart illustrating an operation when signal abnormality detection is performed in an operating state;
FIG. 9 is a time chart illustrating signal abnormality detection in an operating state; and
FIG. 10 is a time chart illustrating a judgment of abnormality detection by non-use bandwidth monitoring using a light receiving level.

### EXEMPLARY EMBODIMENT

Next, an exemplary embodiment of the present invention that a signal monitoring device, a communication system, a signal monitoring method, and a recording medium for recording a program of a signal monitoring device are applied to a PON system will be described in detail with reference to the attached drawings.

First, the exemplary embodiment of the present invention will be schematically described. According to the exemplary embodiment of the present invention, an optical line terminal (OLT) of a PON system can detect an ONT with an abnormal light output range by monitoring a light output state of an ONT during a period that a bandwidth is not allocated.

To this end, as shown in FIG. 2, the OLT according to the exemplary embodiment of the present invention includes abnormality detecting means for determining whether an ONT as a communication partner device has an abnormality or not. The abnormality detecting means determines whether an ONT has an abnormality or not based on allocation information of a no-use bandwidth for an upstream burst signal and information representing whether a receiving signal by an upstream burst signal exists or not.

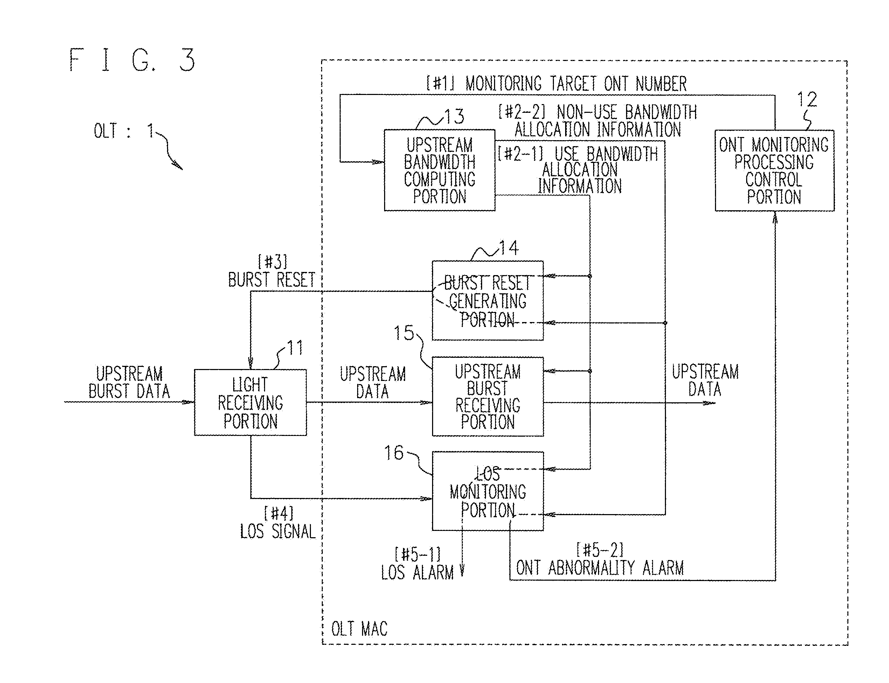

Next, major components of an OLT 1 according to the exemplary embodiment of the present invention will be described with reference to FIG. 3. FIG. 3 shows functional blocks around an OLT MAC which receives an upstream burst signal in the PON system according to the exemplary embodiment of the present invention.

An ONT monitoring processing control portion 12 notifies an upstream bandwidth computing portion 13 of a monitoring target ONT number [#1].

The upstream bandwidth computing portion (bandwidth allocating means) 13 computes a bandwidth allocation for each ONT and notifies a burst reset generating portion 14 and an LOS monitoring portion 16 of non-use bandwidth allocation information [#2-2].

The burst reset generating portion 14 notifies a light receiving portion 11 of a burst reset [#3].

The light receiving portion (receiving means) 11 receives upstream burst data from each ONT and notifies an LOS monitoring portion 16 of an LOS (Loss Of Signal) signal [#4] (signal detection information) which represents whether a receiving signal exists or not.

The LOS monitoring portion 16 detects an abnormality of an ONT based on the non-use bandwidth allocation information [#2-2] and the LOS signal [#4] and notifies the ONT monitoring processing control portion 12 (abnormality detecting means) of an ONT abnormality alarm [#5-2].

Therefore, in the PON system according to the exemplary embodiment of the present invention, because the LOS signal is monitored based on the non-use bandwidth allocation information [#2-2], an ONT with an abnormal light output range can be detected.

Here, the burst reset signal is a signal which starts a receipt processing operation for receiving a burst signal transmitted from a communication partner device (ONT) in order to perform upcoming receipt processing. The burst reset signal is output from the burst reset generating portion 14 at an interval of a bandwidth allocation time for each communication partner device.

Next, a flow of a signal, as an LOS monitoring function which is in common with a typical PON system, in the PON system according to the exemplary embodiment of the present invention will be described with reference to FIG. 3.

The upstream bandwidth computing portion 13 computes a bandwidth allocation for each ONT and notifies the burst reset generating portion 14, the upstream burst receiving portion 15, and the LOS monitoring portion 16 of use bandwidth allocation information [#2-1].

The burst reset generating portion 14 notifies the light receiving portion 11 of the burst reset [#3].

The light receiving portion 11 receives the upstream burst data from each ONT and notifies the LOS monitoring portion 16 of the LOS signal [#4].

If the LOS monitoring portion 16 detects an abnormality based on the use bandwidth allocation information [#2-1] and the LOS signal [#4], it notifies LOS alarm [#5-1] (signal abnormality detecting means).

In the exemplary embodiment of the present invention, in addition to an LOS monitoring function in a typical PON system, a system for monitoring the LOS signal based on non-use bandwidth allocation information is added. Therefore, a structure for accurately detecting an abnormality occurrence of an ONT is realized.

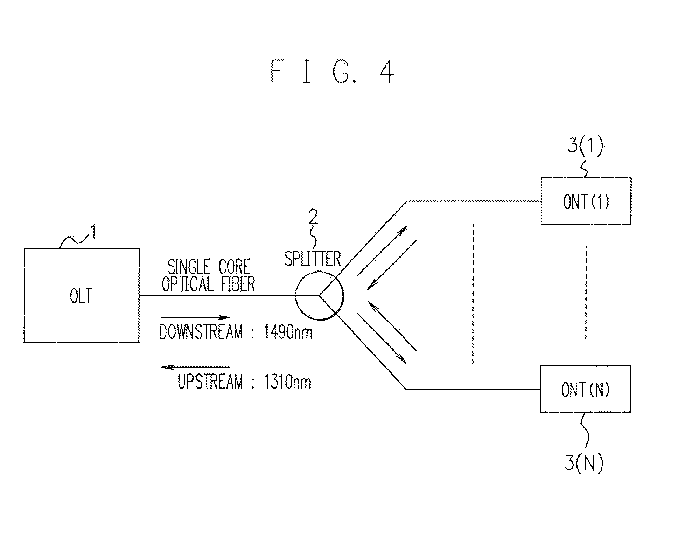

Next, a configuration of the PON system according to the exemplary embodiment of the present invention will be described with reference to FIG. 4.

The PON system according to the exemplary embodiment of the present invention is configured such that an OLT 1 (signal monitoring device) is connected to a plurality of ONTs 3 (communication partner device) by an optical fiber (signal transmission line) through a splitter 2 (light splitting means) as shown in FIG. 4. Therefore, the PON system according to the exemplary embodiment of the present invention configures a point-to-multipoint optical communication system which is capable of optical communication and in which one OLT 1 is connected to a plurality of ONTs 3(1) to ONT 3(N).

The splitter 2 splits a downstream signal transmitted from the OLT 1 and transmits the split signal to all of the ONT 3(1) to the ONT 3(N). The splitter 2 also multiplexes an upstream signal which is to be transmitted to the OLT 1 from each ONT 3.

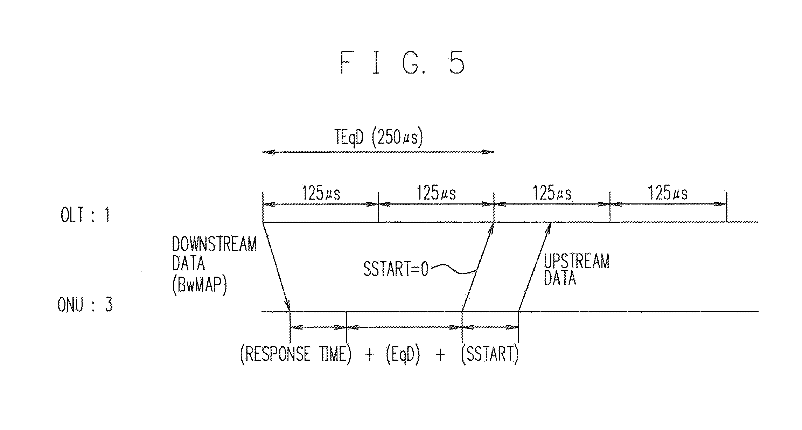

FIG. 5 shows a downstream signal (Bwmap) transmitted from an OLT 1 shown in FIG. 4 and a timing that upstream burst data transmitted from an ONT 3 arrives at the OLT 1 in detail.

In order to receive upstream burst data with a timing of TEqD (250 µs), the OLT 1 measures a transmission delay time (EqD; Equalization Delay) of an upstream burst according to a distance of each ONT 3 by a distance measurement procedure (ranging) and notifies each ONT 3 of a value of EqD.

The OLT 1 notifies the ONT 3 of bandwidth allocation information (Bwmap) at a cycle of 125 µs. The OLT 1 notifies a transmission timing of upstream burst data of each ONT 3 to each ONT 3 according to the bandwidth allocation information (Bwmap) of downstream data.

The ONT 3 transmits upstream burst data when a sum of a response time of the ONT3, a transmission delay time (EqD), and a transmission start timing (SStart) according to BWmap notified from the OLT 1 lapse after receiving BWmap.

The OLT 1 receives the upstream burst data transmitted from the ONT 3 which has performed a bandwidth allocation according to BWmap within a 125 µs window of a timing which is delayed by TEqD (250 µs) after transmission of a downstream signal (Bwmap).

Hereinbefore, the configuration according to the exemplary embodiment of the present invention has been described in detail, but a definition of a response time, a computation method of EqD, and a definition of SStart of FIG. 5 are well-known to those skilled in the art and are not related directly to the present invention, and so detailed descriptions on them ore omitted.

Next, an operation of the PON system according to the exemplary embodiment of the present invention will be described.

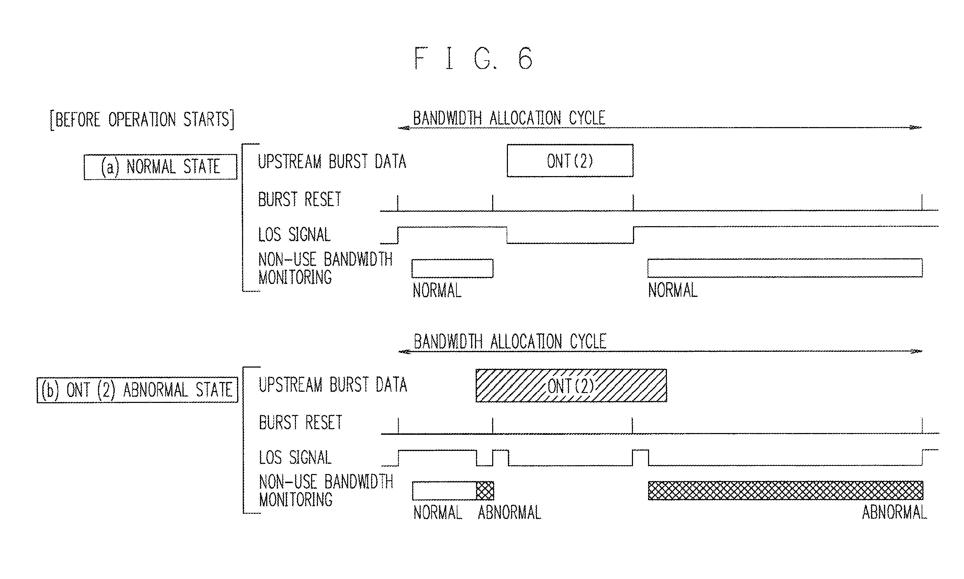

First, an operation for outputting ONT abnormality alarm [#5-2] when the LOS monitoring portion 16 monitors a non-use bandwidth to detect an abnormality before an operation starts will be described with reference to a time chart of FIG. 6. FIGS. 6(a) and 6(b) show a relationship among upstream burst data of the ONT 3(2), the burst reset, the LOS signal, and non-use bandwidth monitoring at a predetermined bandwidth allocation cycle before an operation starts.

The OLT 1 performs the burst reset for the light receiving portion 11 at a predetermined timing that upstream burst data arrives at the OLT 1.

Here, the light receiving portion 11 sets an LOS signal output to "High (LOS detection)" whenever the burst reset is performed (reset of signal detection information) and to "Low (LOS release)" at a point of time when upstream burst data is received.

The OLT 1 performs monitoring of the LOS signal at a non-use bandwidth whenever the burst reset is performed. Here, as shown in FIG. 6(a), it is determined as normal if the LOS signal output at a non-use bandwidth is "High", that is, if a signal is not detected at a time slot allocated as a non-use bandwidth. To the contrary, as shown in FIG. 6(b), it is determined as abnormal if the LOS signal output at a non-use bandwidth is "Low" (receiving signal detection state), that is, if a signal is detected at a time slot allocated as a non-use bandwidth.

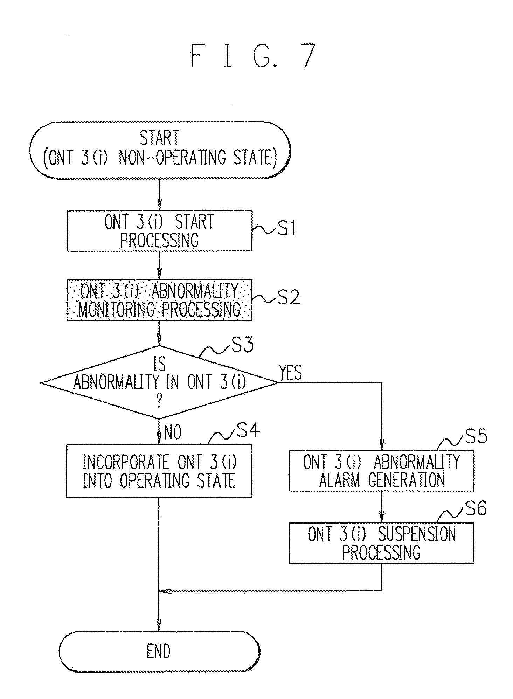

Next, an operation for outputting ONT abnormality alarm [#5-2] when in a non-operating state like a state of FIG. 6, the LOS monitoring portion 16 monitors a non-use bandwidth and detects an abnormality will be described with reference to a flowchart of FIG. 7.

First, it is assumed that an ONT 3(i) is in a non-operating state as an initial state. Next, start processing of the ONT 3(i) is performed (step S1). The Start processing includes processing (ranging) for measuring a distance between the OLT 1 and the ONT 3(i).

When start processing of the ONT 3(i) is completed, the LOS monitoring portion 16 performs abnormality monitoring processing (abnormality detection) for the ONT 3(i) described above using FIG. 6 (step S2). If an abnormality for the ONT 3(i) is not detected (step S3; No), the OLT 1 performs incorporation of the ONT 3(i) into an operating state (step S4), and processing of the flowchart is finished. If an abnormality for the ONT 3(i) is detected (step S3; Yes), the LOS monitoring portion 16 transmits ONT abnormality alarm [#5-2] for the ONT3(i) to the ONT monitoring processing control portion 12 (step S5). The OLT 1 performs suspension processing for the ONT 3(i) (step S6) (compulsory suspending means), and processing of the flowchart is finished.

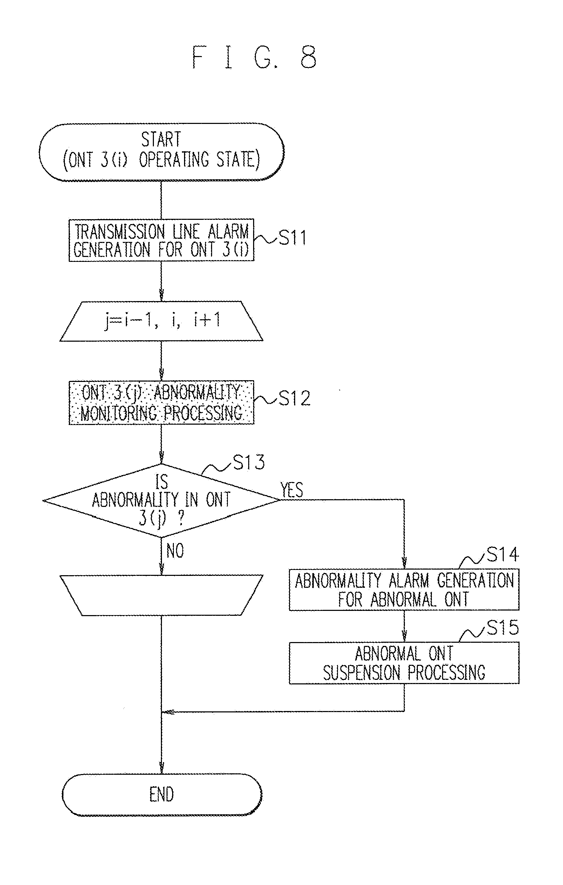

Next, an operation for performing abnormality monitoring processing when in an operating state, the LOS monitoring portion 16 performs signal abnormality monitoring for upstream burst data and detects a signal abnormality will be described with reference to a flowchart of FIG. 8.

First, it is assumed that the ONT 3(i) is in an operating state as an initial state. Here, if an abnormality for the ONT 3(i) is detected by monitoring during a typical operation according to use bandwidth allocation information [#2-1], the LOS monitoring portion 16 dispatches LOS alarm [#5-1] as transmission line alarm (step S11).

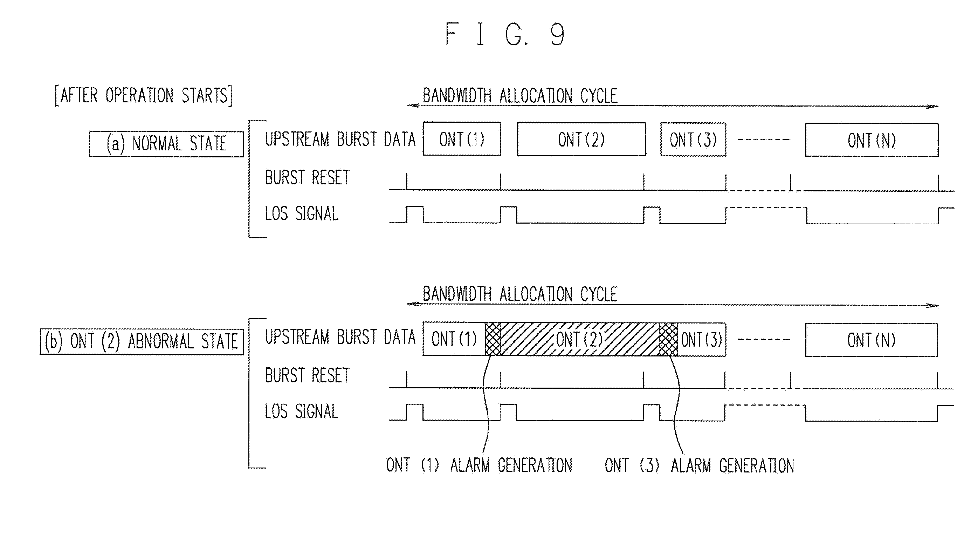

A timing for generating transmission line alarm in an operating state will be described by using a time chart of after an operation starts which is shown in FIG. 9. FIGs. 9(a) and 9(b) show a relationship among upstream burst data of an ONT 3(1) to an ONT 3(N), the burst reset and the LOS signal at a predetermined bandwidth allocation cycle, respectively. A method for viewing each signal is same as in FIG. 6 and, so a description on that is omitted.

FIG. 9(a) shows a state that each ONT is normally operating. FIG. 9(b) shows a case where an abnormality occurs in an ONT 3(2), so that upstream burst data of the ONT 3(2) interfere upstream burst data of neighboring following and preceding ONTs 3.

If an abnormality occurs in the ONT 3(2), upstream burst data of the ONT 3(1) and the ONT 3(3) are destroyed, and so the LOS monitoring portion 16 dispatches the LOS alarm [#5-1] as transmission line alarm for ONT 3(1) and ONT 3(3).

If the LOS alarm [#5-1] is dispatched for ONT 3(i) as described above, the ONT monitoring processing control portion 12 performs abnormality alarm processing for ONT 3(j)={ONT 3(i-1), ONT 3(i), ONT 3(i+1)} (step S12).

As abnormality monitoring processing, at a timing that one bandwidth allocation cycle for allocating a bandwidth to each ONT is finished, the ONT monitoring processing control portion 12 first suspends a bandwidth allocation for each ONT by transmitting a predetermined command for abnormality monitoring processing to the ONT. By transmitting a predetermined command for abnormality monitoring processing to monitoring target ONTs, without suspending an operation of the PON system, the OLT 1 sequentially allocates a bandwidth for abnormality monitoring processing to the monitoring target ONTs one by one and performs above-described abnormality monitoring processing of FIG. 6 for each of three ONTs 3(j).

If an abnormality is detected in at least one of the ONTs 3(j) by such abnormality monitoring processing (step S13; Yes), the LOS monitoring portion 16 dispatches ONT abnormality alarm [#5-2] for an ONT (in FIG. 9, ONT3 (2)) with an abnormality among three ONTs 3 (j) (step S14). The ONT monitoring processing control portion 12 performs suspension processing for the ONT for which ONT abnormality alarm [#5-2] is dispatched (step S15) (compulsive suspending means), and then processing of the flowchart is finished.

An example for performing abnormality monitoring processing of step S12 only for following and preceding ONTs 3 adjacent to an ONT for which transmission line alarm is dispatched has been described hereinbefore, but a target which is subject to abnormality monitoring processing of step S12 is not limited to it. For example, abnormality monitoring processing may be performed for all of the ONT 3(1) to the ONT 3(N). That is, a configuration may be realized such that as an operation of step S12, a bandwidth allocation for each ONT is first suspended, and above-described abnormality monitoring processing using FIG. 6 is sequentially performed for all of the ONT 3(1) to the ONT 3(N) one by one.

As described above, according to the exemplary embodiment of the present invention, there are following advantages.

As a first advantage, since the LOS signal is monitored based on non-use bandwidth allocation information, the ONT 3 with an abnormal light output range can be detected.

As a second advantage, since abnormality monitoring processing is performed for an ONT 3 before an operation starts, the abnormal ONT 3 can be detected in advance without incorporating into an operating state. Therefore, it is possible to prevent affection on communications between the OLT 1 and other adjacent ONTs 3 which results from incorporation of an abnormal ONT into an operating state.

As a third advantage, since abnormality monitoring processing for the ONT has already performed even in case where transmission line alarm is generated after an operation starts, selection of an abnormal ONT or suspension processing for an abnormal ONT can be surely performed during an operation.

As described above, according to the exemplary embodiment of the present invention, it is possible to prevent affection on communications between the OLT 1 and other adjacent ONTs 3 which results from incorporation of an abnormal ONT into an operating state, the PON system in which a stable optical communication is possible can be provided.

As described above, in the related art, the LOS (Loss of Signal) signal is monitored based on use bandwidth allocation information, and so there is a problem in that an ONT with an abnormal light output is not detected and is incorporated into an operating state.

According to the exemplary embodiment of the present invention, an ONT light emitting state during a period that a bandwidth is not allocated is monitored, and so an abnormal ONT can be surely detected even before incorporation into an operation state, and communications between other ONTs and the OLT are not affected by a light output of an abnormal ONT during a period other than a bandwidth allocation period, whereby the PON system in which a stable optical communication is possible can be provided.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

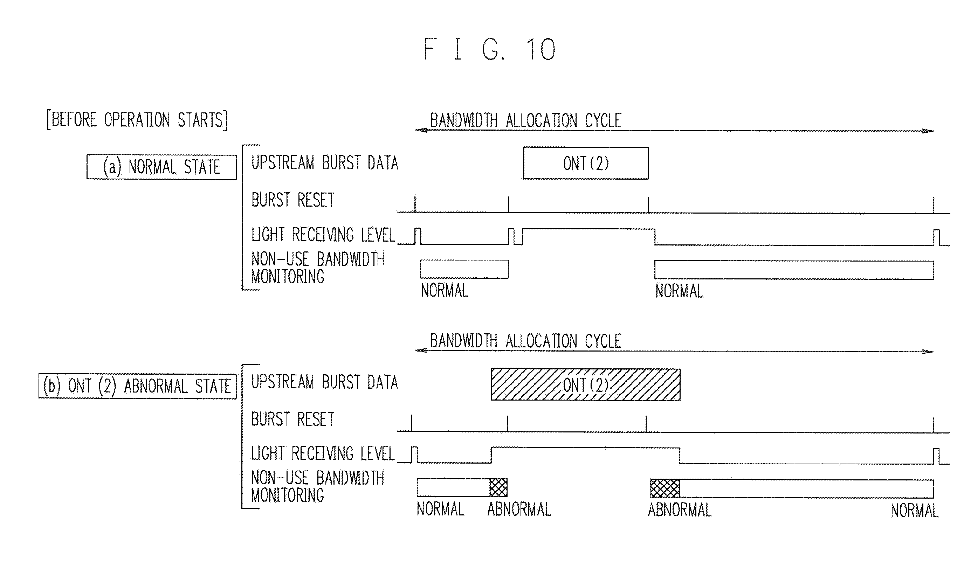

For example, in the above-described configuration of the exemplary embodiment of the present invention, instead of performing abnormality monitoring processing by using the LOS signal from the light receiving portion 11, abnormality monitoring processing may be performed by using a light receiving level by the light receiving portion 11. In this instance, the OLT 1 includes a light receiving level monitoring portion instead of the LOS monitoring portion 16 in FIG. 3, and the light receiving level monitoring portion detects an abnormality as shown in FIG. 10. That is, as an operation of step S2 of FIG. 7, if a light receiving level except the burst reset is detected at a time slot which is determined as non-use bandwidth by non-use bandwidth allocation information transmitted from the upstream bandwidth computing portion 13, the ONT 3(i) is detected as having an abnormality.

Also, in the exemplary embodiment of the present invention described above, it has been described that the burst reset [#3] is dispatched from the burst reset generating portion 14, but a configuration which does not use the burst reset can be similarly applied to the present invention. In this instance, as an operation of step S2 of FIG. 7, if a signal is received at a time slot which is determined as non-use bandwidth by non-use bandwidth allocation information transmitted from the upstream bandwidth computing portion 13, the ONT 3(i) is detected as having an abnormality.

Also, in the exemplary embodiment of the present invention described above, an application to the PON system has been described, but the present invention is not limited to it and may be similarly applied to various point-to-multipoint optical systems such as a Gigabit-PON (G-PON) system or a Gigabit Ethernet-PON (GE-PON) system.

Also, the present invention is not limited to the optical communication system and may be similarly applied to a configuration with an electrical module having a burst receiving function instead of the light receiving portion 11. In this instance, the signal monitoring device includes a signal receiving level monitoring portion instead of the LOS monitoring portion 16 of FIG. 3, and the signal receiving level monitoring portion perform abnormality monitoring processing. That is, as an operation of step S2 of FIG. 7, a signal receiving level is detected at a time slot which is determined as non-use bandwidth by on non-use bandwidth allocation information transmitted from the upstream bandwidth computing portion, the communication partner device is detected as having an abnormality.

Also, by recording the above-described processing procedure which implements the OLT or the PON system according to the exemplary embodiment of the present invention on a recording medium as a program, the above-described respective functions according to the exemplary embodiment of the present invention may be implemented by performing CPU processing of a computer which configures a system by a program supplied from the recording medium.

In this instance, even when an information group containing a program is supplied to an output device from an external recording medium by the recording medium or via a network, the present invention may be applied. That is, a novel function of the present invention is realized by a program code itself read from the recording medium, and the present invention is implemented by the recording medium storing the program code and a signal read from the recording medium. As the recording medium, for example, flexible disks, hard disks, optical disks, magneto-optical discs, CD-ROMs, CD-Rs, CD-RWs, DVD-ROMs, DVD-RAMs, DVD-RWs, DVD+RWs, magnetic tapes, non-volatile memory cards, ROMs, etc. may be used.

By using the recording medium recording the program according to the present invention, the respective functions according to the exemplary embodiment of the present invention can be realized in the OLT or the PON system controlled by a corresponding program.

As described above, according to the present invention, even before a communication partner device is incorporated into an operating state, an abnormal communication partner device can be detected, so that it is possible to prevent an abnormal communication partner device from affecting communications with other devices, whereby stable communications can be achieved.

An example 1 describes a signal monitoring device, comprising
abnormality detecting means for detecting an abnormality of a communication partner device based on whether a receiving signal exists at a time slot allocated as a non-use bandwidth or not.

An example 2 describes the signal monitoring device of the example 1, wherein the abnormality detecting means performs abnormality monitoring processing for the communication partner device before the communication partner device is incorporated into an operating state when the communication partner device starts an operation.

An example 3 describes the signal monitoring device of the example 1 comprising signal abnormality detecting means for detecting whether an abnormality exists in a signal transmitted from a communication partner device that is in an operating state,
wherein the signal abnormality detecting means performs abnormality monitoring processing for at least the communication partner device and communication partner devices that directly follow and precede the communication partner device in a bandwidth allocation order when signal abnormality is detected in the communication partner device by the signal abnormality detecting means.

An example 4 describes the signal monitoring device of the example 3, wherein when signal abnormality is detected in the communication partner device by the signal abnormality detecting means, the signal abnormality detecting means first suspends a bandwidth allocation for each communication partner device and then sequentially allocates a bandwidth for abnormality monitoring processing to monitoring target communication partner devices one by one to perform abnormality monitoring processing.

An example 5 describes the signal monitoring device of the example 1 comprising bandwidth allocating means for computing a bandwidth allocation to output non-use bandwidth allocation information, and
receiving means for receiving a signal from a communication partner device and outputting signal detection information that represents whether the receiving signal exists or not,
   wherein the abnormality detecting means performs abnormality monitoring processing by using the non-use bandwidth allocation information by the bandwidth allocating means and the signal detection information by the receiving means.

An example 6 describes the signal monitoring device of the example 5 comprising burst reset generating means for outputting a burst reset signal at an interval of a bandwidth allocation time for each communication partner device,
wherein the signal detection information by the receiving means is reset whenever the burst reset signal is output and becomes a receiving signal detection state when the receiving signal is detected,
the abnormality detecting means determines as abnormal by abnormality monitoring processing if the signal detection information by the receiving means is in the receiving signal detection state at a time slot of a non-use bandwidth based on non-use bandwidth allocation information by the bandwidth allocating means.

An example 7 describes the signal monitoring device of the example 1 comprising compulsory suspending means for suspending a communication partner device in which an abnormality is detected by the abnormality detecting means.

An example 8 describes a communication system, comprising:
a plurality of communication partner devices that are connected to the signal monitoring device of the example 1 via a signal transmission line.

An example 9 describes a signal monitoring method, comprising:
a signal detecting process of determining whether a receiving signal exists at a time slot allocated as a non-use bandwidth or not; and
an abnormality detecting process of detecting an abnormality of a communication partner device based on the determination result of the signal detecting process.

An example 10 describes the signal monitoring method of the example 9, wherein in the abnormality detecting process, when a communication partner device starts an operation, abnormality monitoring processing for the communication partner device is performed before the communication partner device is incorporated into an operating state.

An example 11 describes the signal monitoring method of the example 9 comprising a signal abnormality detecting process of detecting whether an abnormality exists in a signal from a communications partner device that is in an operating state or not,
wherein in the abnormality detecting process, when a signal abnormality is detected in a communication partner device by the signal abnormality detecting process, abnormality monitoring processing is performed for at least the communication partner device and communication partner devices that directly follow and precede the communication partner device in a bandwidth allocation order.

An example 12 describes the signal monitoring method of the example 11, wherein in the abnormality detecting process, when a signal abnormality is detected in a communication partner device by the signal abnormality detecting process, a bandwidth allocation for each communication partner device is first suspended, and a bandwidth for abnormality monitoring processing is then sequentially allocated to monitoring target communication partner devices one by one to perform abnormality monitoring processing.

An example 13 describes the signal monitoring method of the example 9 comprising a bandwidth allocating process of computing a bandwidth allocation to output non-use bandwidth allocation information,
wherein in the signal detecting process, a signal from a communication partner device is monitored to output signal detection information representing whether a receiving signal exists or not, and
in the abnormality detecting process, abnormality monitoring processing is performed by using the non-use bandwidth allocation information by the bandwidth allocating process and the signal detection information by the signal detecting process.

An example 14 describes the signal monitoring method of the example 13 comprising a burst reset generating process for outputting a burst reset signal at an interval of a bandwidth allocation time for each communication partner device,
wherein the signal detection information by the signal detecting process is reset whenever the burst reset signal is output and becomes a receiving signal detection state if the receiving signal is detected, and
in the abnormality detecting process, it is determined as abnormal by abnormality monitoring processing if the signal detection information by the signal detecting process is in the receiving signal detection state at a time slot of a non-use bandwidth based on non-use bandwidth allocation information by the bandwidth allocating process.

An example 15 describes the signal monitoring method of the example 9 comprising a compulsory suspending process for suspending a communication partner device in which an abnormality is detected by the abnormality detecting process.

An example 16 describes a recording medium for recording a program for making a signal monitoring device execute the steps of:
signal detection processing for determining whether a receiving signal exists at a time slot allocated as a non-use bandwidth or not, and
abnormality detection processing for detecting an abnormality of a communication partner device based on the determination result of signal detection processing.

An example 17 describes the recording medium for recording the program of the signal monitoring device of the example 16, wherein the in abnormality detection processing, when a communication partner device starts an operation, abnormality detection for the communication partner device is performed before the communication partner device is incorporated into an operating state.

An example 18 describes the recording medium for recording the program of the signal monitoring device of the example 16, comprising signal abnormality detection processing of detecting whether an abnormality exists in a signal from a communication partner device that is in an operating state or not,
wherein in abnormality detection processing, when a signal abnormality is detected in a communication partner device by signal abnormality detection processing, abnormality detection is performed for at least the communication partner device and communication partner devices that directly follow and precede the communication partner device in a bandwidth allocation order.

An example 19 describes the recording medium for recording the program of the signal monitoring device of the example 18, wherein in abnormality detection processing, when a signal abnormality is detected in a communication partner device by signal abnormality detection process, a bandwidth allocation for each communication partner device is first suspended, and a bandwidth for abnormality detection is then sequentially allocated to monitoring target communication partner devices one by one to perform abnormality detection.

An example 20 describes the recording medium for recording the program of the signal monitoring device of the example 16, wherein bandwidth allocation processing of computing a bandwidth allocation to output non-use bandwidth allocation information,
in signal detection processing, a signal from a communication partner device is monitored to output signal detection information representing whether a receiving signal exists or not, and
in abnormality detection processing, abnormality detection is performed by using the non-use bandwidth allocation information by bandwidth allocation processing and the signal detection information by signal detection processing.

An example 21 describes the recording medium for recording the program of the signal monitoring device of the example 20, wherein the signal monitoring device performs burst reset generation processing for outputting a burst reset signal at an interval of a bandwidth allocation time for each communication partner device,
wherein the signal detection information by signal detection processing is reset whenever the burst reset signal is output and becomes a receiving signal detection state if the receiving signal is detected, and
in abnormality detection processing, it is determined as abnormal if the signal detection information by signal detection processing is the receiving signal detection state at a time slot of a non-use bandwidth based on non-use bandwidth allocation information by bandwidth allocation processing.

An example 22 describes the recording medium for recording the program of the signal monitoring device of the example 16, wherein the signal monitoring device performs compulsory suspension processing for suspending a communication partner device in which an abnormality is detected by abnormality detection processing.

According to one embodiment, even before a communication partner device is incorporated into an operating state, an abnormal communication partner device can be detected, so that it is possible to prevent an abnormal communication partner device from affecting communications with other devices, whereby stable communications can be achieved. To this end, a signal monitoring device includes abnormality detecting means for detecting an abnormality of a communication partner device based on whether a receiving signal exists at a time slot allocated as a non-use bandwidth or not.

## Claims

1. A signal monitoring device, comprising:
abnormality detecting means for detecting an abnormality of a communication partner device based on whether a receiving signal exists at a time slot allocated as a non-use bandwidth or not.

2. The signal monitoring device of claim 1, wherein the abnormality detecting means performs abnormality monitoring processing for the communication partner device before the communication partner device is incorporated into an operating state when the communication partner device starts an operation.

3. The signal monitoring device of claim 1 or 2 comprising signal abnormality detecting means for detecting whether an abnormality exists in a signal transmitted from a communication partner device that is in an operating state,
wherein the signal abnormality detecting means performs abnormality monitoring processing for at least the communication partner device and communication partner devices that directly follow and precede the communication partner device in a bandwidth allocation order when signal abnormality is detected in the communication partner device by the signal abnormality detecting means.

4. The signal monitoring device of claim 3, wherein when signal abnormality is detected in the communication partner device by the signal abnormality detecting means, the signal abnormality detecting means first suspends a bandwidth allocation for each communication partner device and then sequentially allocates a bandwidth for abnormality monitoring processing to monitoring target communication partner devices one by one to perform abnormality monitoring processing.

5. The signal monitoring device of one of claims 1 to 4 comprising bandwidth allocating means for computing a bandwidth allocation to output non-use bandwidth allocation information, and
receiving means for receiving a signal from a communication partner device and outputting signal detection information that represents whether the receiving signal exists or not,
wherein the abnormality detecting means performs abnormality monitoring processing by using the non-use bandwidth allocation information by the bandwidth allocating means and the signal detection information by the receiving means.

6. The signal monitoring device of claim 5 comprising burst reset generating means for outputting a burst reset signal at an interval of a bandwidth allocation time for each communication partner device,
wherein the signal detection information by the receiving means is reset whenever the burst reset signal is output and becomes a receiving signal detection state when the receiving signal is detected,
the abnormality detecting means determines as abnormal by abnormality monitoring processing if the signal detection information by the receiving means is in the receiving signal detection state at a time slot of a non-use bandwidth based on non-use bandwidth allocation information by the bandwidth allocating means.

7. The signal monitoring device of one of claims 1 to 6 comprising compulsory suspending means for suspending a communication partner device in which an abnormality is detected by the abnormality detecting means.

8. A communication system, comprising:
a plurality of communication partner devices that are connected to the signal monitoring device of one of claims 1 to 7 via a signal transmission line.

9. A signal monitoring method, comprising:
a signal detecting process of determining whether a receiving signal exists at a time slot allocated as a non-use bandwidth or not; and
an abnormality detecting process of detecting an abnormality of a communication partner device based on the determination result of the signal detecting process.

10. The signal monitoring method of claim 9, wherein in the abnormality detecting process, when a communication partner device starts an operation, abnormality monitoring processing for the communication partner device is performed before the communication partner device is incorporated into an operating state.

11. The signal monitoring method of claim 9 or 10 comprising a signal abnormality detecting process of detecting whether an abnormality exists in a signal from a communication partner device that is in an operating state or not,
wherein in the abnormality detecting process, when a signal abnormality is detected in a communication partner device by the signal abnormality detecting process, abnormality monitoring processing is performed for at least the communication partner device and communication partner devices that directly follow and precede the communication partner device in a bandwidth allocation order.

12. The signal monitoring method of claim 11, wherein in the abnormality detecting process, when a signal abnormality is detected in a communication partner device by the signal abnormality detecting process, a bandwidth allocation for each communication partner device is first suspended, and a bandwidth for abnormality monitoring processing is then sequentially allocated to monitoring target communication partner devices one by one to perform abnormality monitoring processing.

13. The signal monitoring method of one of claims 9 to 12 comprising a bandwidth allocating process of computing a bandwidth allocation to output non-use bandwidth allocation information,
wherein in the signal detecting process, a signal from a communication partner device is monitored to output signal detection information representing whether a receiving signal exists or not, and
in the abnormality detecting process, abnormality monitoring processing is performed by using the non-use bandwidth allocation information by the bandwidth allocating process and the signal detection information by the signal detecting process.

14. The signal monitoring method of claim 13 comprising a burst reset generating process for outputting a burst reset signal at an interval of a bandwidth allocation time for each communication partner device,
wherein the signal detection information by the signal detecting process is reset whenever the burst reset signal is output and becomes a receiving signal detection state if the receiving signal is detected, and
in the abnormality detecting process, it is determined as abnormal by abnormality monitoring processing if the signal detection information by the signal detecting process is in the receiving signal detection state at a time slot of a non-use bandwidth based on non-use bandwidth allocation information by the bandwidth allocating process.

15. The signal monitoring method of one of claims 9 to 14 comprising a compulsory suspending process for suspending a communication partner device in which an abnormality is detected by the abnormality detecting process.
